# EUROPEAN PATENT APPLICATION

(11) **EP 4 358 338 A1**
(43) Date of publication of application: **24.04.2024**
(21) Application number: 22845305.6
(22) Date of filing: 19.07.2022
(51) Int. Cl.: H02J 3/32, H02J 3/38, H02J 3/46

(54) **GRID-CONNECTED OPERATION CONTROL METHOD AND APPARATUS FOR FUEL CELL COMBINED HEAT AND POWER SYSTEM**

(30) Priority: 20.07.2021 CN 202110819601
(71) Applicant: Qingdao Haier Smart Technology R&D Co., Ltd., Shandong 266101 (CN)
(72) Inventor: LV, Nan, Qingdao, Shandong 266101 (CN); YU, Guoxin, Qingdao, Shandong 266101 (CN); LI, Jing, Qingdao, Shandong 266101 (CN)
(74) Representative: Gille Hrabal Partnerschaftsgesellschaft mbB Patentanwälte
(86) International application number: PCT/CN2022/106446
(87) International publication number: WO 2023/001140

(57) **Abstract**

Disclosed are a fuel cell combined heat and power system and a grid-connected operation control method therefor. The fuel cell combined heat and power system includes a thermoelectric module, a DC/DC conversion module, a DC/AC inverter module and a thermal management module; the thermoelectric module is connected to a DC bus through the DC/DC conversion module, and an inverter unit is connected to the DC bus; an output end of the DC/DC conversion module is connected to a DC load of a user, and an output end of the inverter unit is connected to an AC load of the user and a grid; and the control method includes: correcting output power of a fuel cell module according to a real-time heat supply temperature to acquire an output power target value; and controlling a switching tube of the DC/DC conversion module to be turned on or off according to the output power target value.

## Description

### TECHNICAL FIELD

The present invention relates the technical field of fuel cell power supply and heat supply, in particular to a grid-connected operation control method and device for a combined heat and power system.

### BACKGROUND ART

The widespread concern in various industries is to popularize the application of clean energy and improve the energy utilization efficiency as the global greenhouse effect is increasingly serious and energy mining becomes more costly. As a clean energy source, hydrogen energy has the advantages such as harmless emission, renewability and a high energy utilization rate. The fuel of a residential fuel cell system based on hydrogen energy has the characteristic of generating electricity and heat at the same time, and can control a working state of the fuel cell by controlling the output heat and electricity.

At present, there are three major types of control strategies for grid-connected fuel cell systems:
(1) Electric load following strategy-the output power of the fuel cell is required to be adjusted according to electric load requirements. The generated heat is used for heat supply of users. When the heat is excessive, waste heat is directly discharged, and when insufficient, the heat is supplied by other heat sources. When the power is insufficient, an external grid is used for supplementing it. The basic requirement of adopting the electric load following strategy is that the electricity generating power of the fuel cell is not lower than the minimum power of household loads.
(2) Thermal load following strategy-the output power of the fuel cell is required to be adjusted according to thermal load requirements. If the thermal load does not meet heat requirements, an auxiliary heat source supplies heat for the users, and meanwhile, the system is connected to the grid. When the generated electric power is insufficient, the electricity is supplemented by the grid; and when the electricity is excessive, the excessive electricity is fed to the grid.
(3) Basic load strategy-the system operates under a rated power of the fuel cell, and meanwhile, the system is integrated into the grid to realize the balance between the electricity surplus of the system and the grid.

As for some fuel cell output electricity control methods, impedance units are additionally provided and then inverters are connected, but such methods only allow for control of the inverters with one degree of freedom, and cannot control reactive power components.

### SUMMARY OF THE INVENTION

An object of the present disclosure is to provide a grid-connected operation control method and device for a combined heat and power system.

The present disclosure provides a grid-connected operation control method for a fuel cell combined heat and power system, the fuel cell combined heat and power system comprises a thermoelectric module, a DC/DC conversion module, a DC/AC inverter module and a thermal management module; the thermoelectric module is connected to a DC bus through the DC/DC conversion module, andthe inverter module is connected to the DC bus; an output end of the DC/DC conversion module is connected to a DC load of a user, and an output end of the inverter unit is connected to an AC load of the user and a grid; and
the control method comprises the steps:
acquiring a real-time heat supply temperature of the thermoelectric module and an AC grid voltage parameter;
correcting output power of a fuel cell module according to the real-time heat supply temperature to acquire an output power target value;
controlling a switching tube of the DC/DC conversion module to be turned on or off according to the output power target value; and
generating a DC/AC inverter output voltage target value according to the AC grid voltage parameter, and controlling a switching tube of the DC/AC inverter module to be turned on or off according to the output voltage target value.

As a further improvement of the present disclosure, "generating a DC/AC inverter output voltage target value according to the AC grid voltage parameter, and controlling a switching tube of the DC/AC inverter module to be turned on or off according to the output voltage target value" further comprises the steps:
acquiring a real-time output current parameter of the DC/AC inverter module;
acquiring a DC bus voltage target value and a DC bus voltage measured value; and
correcting a DC/AC output voltage according to the real-time output current parameter of the DC/AC inverter module, the AC grid voltage parameter, the DC bus voltage target value and the DC bus voltage measured value.

As a further improvement of the present disclosure, "correcting a DC/AC output voltage according to the real-time output current parameter of the DC/AC inverter module, the AC grid voltage parameter, the DC bus voltage target value and the DC bus voltage measured value" further comprises the steps:
acquiring target output voltages Vαref and Vβref in an αβ coordinate system according to the AC grid voltage parameter, the DC bus voltage target value and the DC bus voltage measured value;
acquiring output voltages Va, Vb and Vc in an abc coordinate system according to the target output voltages Vαref and Vβref; and
controlling the switching tube to be turned on or off through an SPWM driver according to the output voltages Va, Vb and Vc.

As a further improvement of the present disclosure, "acquiring target output voltages Vαref and Vβref in an αβ coordinate system according to the AC grid voltage parameters, the DC bus voltage target value and the DC bus voltage measured value" further comprises the steps:
acquiring a first difference value between the DC bus voltage target value and the DC bus voltage measured value;
acquiring a three-phase current measured value of the DC/AC inverter module, and determining a measured current value iα in an α coordinate axis and a measured current value iβ in a β coordinate axis of the DC/AC inverter module according to the three-phase current measured value;
determining a current target value iαref in the α coordinate axis according to the first difference value, and determining a current target value iβref in the β coordinate axis according to a grid voltage; and
calculating a difference value between the measured current value iβ and the current target value iβref to acquire a third difference value; and converting the third difference value into a voltage Vβ in a β output axis by using a PR regulator.

As a further improvement of the present disclosure, "determining a current target value iαref in the α coordinate axis according to the first difference value, and determining a current target value iβref in the β coordinate axis according to a grid voltage" further comprises the steps:
converting the first difference value into a d-axis current target value idref in a dq coordinate system through a PI regulator; and determining a q-axis current target value iqref according to the grid voltage; and
converting the current values idref and iqref in the dq coordinate system into the current values iαref and iβref in the αβ coordinate system.

As a further improvement of the present disclosure, a phase-locked loop is used to calculate an angle required for transformation between the dq coordinate system and the αβ coordinate system based on measured grid voltages vsa, vsb and vsc in the abc coordinate system.

As a further improvement of the present disclosure, "controlling a switching-off tube of the DC/DC conversion module to be turned on or off according to the output power target value" further comprises: outputting the power target value to acquire an output current target value iref;
calculating a difference value between the target value and a measured current value to acquire a fourth difference value, and inputting the fourth difference value to a PI regulator; and
comparing an output signal of the PI regulator with a carrier signal to acquire a switching tube control signal of the DC/DC conversion module.

As a further improvement of the present disclosure, "controlling a switching-off tube of the DC/DC conversion module to be turned on or off according to the output power target value" further comprises: judging whether the heat supply temperature exceeds an allowable range, if exceeding the allowable range, generating a target output power correction coefficient K according to a temperature difference between a target temperature and a measured temperature, and correcting the output power target value to K times an original value.

As a further improvement of the present disclosure, "generating a target output power correction coefficient K according to a temperature difference between the target temperature and a measured temperature" further comprises: inputting the temperature difference into the PI regulator, and adding 1 to an output value of the PI regulator to acquire the correction coefficient K.

The present disclosure further provides a grid-connected operation control device for a fuel cell combined heat and power system, characterized in that the control device comprises a thermoelectric module, a DC/DC conversion module, a DC/AC inverter module, a thermal management module, a detection unit, a target power calculation module and a regulator;
the thermoelectric module is connected to a DC bus through the DC/DC conversion module, and an inverter unit is connected to the DC bus;
an output end of the DC/DC conversion module is connected to a DC load of a user, and an output end of the inverter unit is connected to an AC load of the user and a grid;
the detection unit acquires a real-time heat supply temperature of the thermoelectric module, a DC bus voltage parameter and an AC grid voltage parameter;
the target power calculation module calculates a thermoelectric output power target value according to the real-time heat supply temperature;
the regulator generates a switching tube control signal of the DC/AC inverter module according to a measured bus voltage and a grid measured voltage, and generates a switching tube control signal of the DC/DC conversion module according to the real-time heat supply temperature and the output power target value of the thermoelectric module; and
a switching tube driving unit of the DC/DC conversion module is used to compare an output signal of an output power regulator with a carrier signal tube control signal to generate the switching tube control signal of the DC/DC module.

The technical solution of the present invention has the beneficial technical effects in the following aspects:
① Based on the feedback of a hot water temperature and a grid-connected voltage, an output power target value and a voltage output value of a fuel cell are corrected, especially for the application of feedforward control, when the grid voltage suddenly drops, the rapid response of an inverter output voltage can be timely responded as the grid voltage to avoid the occurrence of an inverter surge current, which is beneficial to the improvement of system stability.
(2) The current and voltage output by the fuel cell form a closed loop with current, voltage and hot water requirements on a user side. By correcting the target value, the transformation requirements can be responded, and meanwhile, the rapid response is realized by applying feedforward control.
③ A PR regulator is used to perform closed-loop control on the current in a αβ coordinate system, which avoids complicated coordinate transformation and decoupling control and improves the dynamic performance of the system.
④ Through the series connection of DC (direct current)/DC and DC/AC (alternating current) inverters, two degrees of freedom are achieved, which can decouple active components from reactive components and control the reactive components.

### BRIEF DESCRIPTION OF THE DRAWINGS

Fig. 1 is a flowchart of a grid-connected operation control method for a fuel cell combined heat and power system.
Fig. 2 is a flowchart of another grid-connected operation control method for a fuel cell combined heat and power system.
Fig. 3 is a flowchart of yet another grid-connected operation control method for a fuel cell combined heat and power system.
Fig. 4 is a flowchart of yet another grid-connected operation control method for a fuel cell combined heat and power system.
Fig. 5 is a flowchart of yet another grid-connected operation control method for a fuel cell combined heat and power system.
Fig. 6 is a flowchart of yet another grid-connected operation control method for a fuel cell combined heat and power system.
Fig. 7 is a block diagram of a control system for a fuel cell combined heat and power device.
Fig. 8 is a block diagram of a DC/AC regulator of a control system for a fuel cell combined heat and power device.
Fig. 9 is a block diagram of a DC/DC regulator of a control system for a fuel cell combined heat and power device.

### DETAILED DESCRIPTION

The present invention will be further described in detail in combination with the accompanying drawings and embodiments. It can be understood that the specific embodiments described herein are only for explaining the present invention, but not for limiting the present invention. In addition, it should also be noted that, for the convenience of description, only parts related to the present invention, but not all structures, are shown in the accompanying drawings.

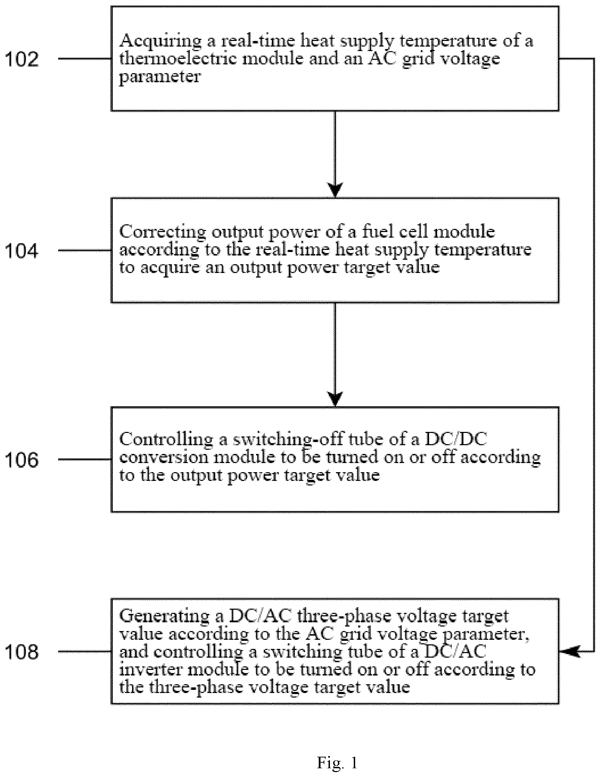

Fig. 1 is a flowchart of a grid-connected operation control method for a fuel cell combined heat and power system according to a first embodiment of the present invention, which can be applied to a grid-connected operation control scenario based on the fuel cell combined heat and power system, and the method can be executed by a functional module configured with specific combined heat and power system software and hardware.

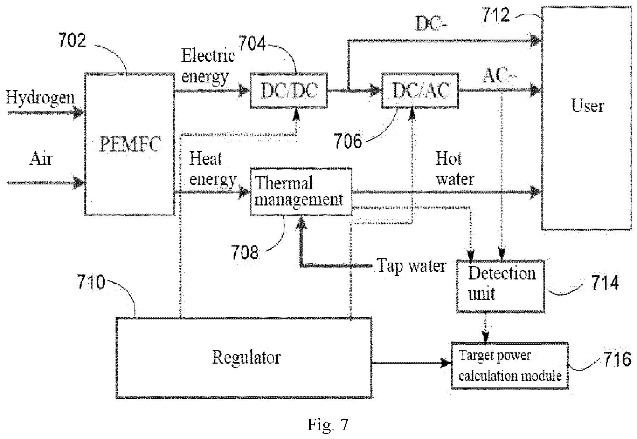

Referring to Fig. 7, the fuel cell combined heat and power system includes a thermoelectric module PEMFC 702, a DC/DC conversion module 704, a DC/AC inverter module 706 and a thermal management module 708. The thermoelectric module is connected to a DC bus through the DC/DC conversion module 704, and the inverter module 706 is connected to the DC bus. An output end of the DC/DC conversion module 704 is connected to a DC load of a user, and the output end of an inverter module is connected to a AC load of the user and a grid.

Typically, the thermoelectric module 702 may be a fuel cell system. The fuel cell system uses clean energy such as hydrogen or methane as fuel, and generates a higher calorific value while generating electricity. Therefore, the combined heat and power system can realize heat supply, AC power supply and DC power supply. In a grid-connected operation mode, the combined heat and power system can simultaneously supply heat and power. The grid-connected mode means that the thermoelectric system is connected in parallel with the grid while supplying power and heat to the user. The thermoelectric system can absorb electric energy of the grid when the function is insufficient, and can feed electricity to the grid when the electric energy of the system is surplus.

As shown in Fig. 1, an island operation control method for a combined heat and power system specifically includes the following steps.

In step 102, a real-time heat supply temperature of the thermoelectric module and an AC grid voltage parameter are acquired.

The heat supply temperature is the temperature of a hot water pipe in the thermoelectric module, and the hot water temperature may be a temperature of a water outlet close to the thermal management module or a temperature of a water inlet close to a user side. A temperature sensor is arranged in the thermal management module to monitor the water temperature in real time.

Optionally, the system is provided with a detection module for detecting the AC grid voltage parameter of the user. The detection module can detect an a-axis voltage, a b-axis voltage and a c-axis voltage in a three-phase current abc coordinate system of the grid.

In step 104, the output power of a fuel cell module is corrected according to the real-time heat supply temperature to acquire an output power target value.

In step 106, a switching tube of the DC/DC conversion module is controlled to be turned on or off according to the output power target value.

In step 108, a DC/AC three-phase voltage target value is generated according to the AC grid voltage parameter, and a switching tube of the DC/AC inverter module is controlled to be turned on or off according to the three-phase voltage target value.

As shown in Fig. 1, step 106 and step 108 may be executed at the same time to meet the DC load and the AC load of the user simultaneously. Step 102 to step 108 correct the output power target value of the fuel cell and the voltage output value based on the hot water temperature and grid-connected voltage feedback, and the system heat output follows user requirements and the voltage output can follow the user requirements.

The DC bus is used to supply the DC provided by the DC/DC module to the DC power load on the user side. At the same time, the DC bus supplies the DC provided by the DC/DC module to the DC/AC inverter module. The grid voltage on the user side and the temperature parameter are used as external input parameters of the system to regulate the output power of the thermoelectric module, thereby realizing heat requirements on the user side and load requirements of the grid.

The output power of the thermoelectric module is dynamically adjusted according to load transformation of the user. The target output power of the thermoelectric module, which is positively related to heat consuming requirements of the user and the AC load requirements, is dynamically adjusted along with the transformation of the temperature and the grid voltage value. The system changes a bus output current according to the real-time temperature, the target output power after the change of the real-time temperature and the loads of the user, so that the output power of a hotspot module follows the output power target value.

In the above solution, a closed loop is formed between the current and voltage output by the fuel cell and the current, voltage and hot water requirements on the user side, and the transformation requirements can be responded by correcting the target value.

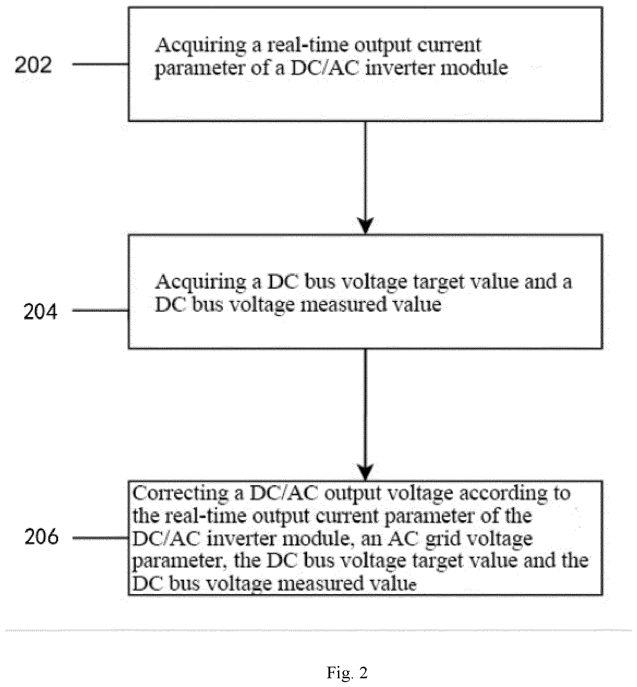

Fig. 2 is a preferred example of the above step 108, which serves as a sub-step of step 108. As shown in Fig. 2, step 108 further includes the following steps.

In step 202, real-time output current parameters of the DC/AC inverter module are acquired.

The real-time current parameters of the DC/AC inverter module include real-time output current parameters in the abc coordinate system. The real-time output current parameters include an a-axis current ia, a b-axis current ib and a c-axis current ic. The currents ia, ib and ic are the current values of the input end of an inductor device of the inverter module, respectively.

In step 204, a DC bus voltage target value and a DC bus voltage measured value are acquired.

The DC bus voltage value and the DC bus voltage target value may be detected by the thermoelectric module and may also be provided by the DC/DC conversion module. The DC bus voltage target value is a fixed value designed by the system, and is related to a DC load of the system.

In step 206, the DC/AC output voltage is corrected according to the real-time output current parameters of the DC/AC inverter module, the AC grid voltage parameter, the DC bus voltage target value and the DC bus voltage measured value.

Specifically, according to the real-time output current parameters of the DC/AC inverter module, the AC grid voltage parameter, the DC bus voltage target value and the DC bus voltage measured value, a DC/AC output voltage target value Vref is generated through calculation by a regulator. The output voltage target value includes triaxial voltages Va, Vb and Vc, and the triaxial voltages generate a switching tube driving signal through a switching tube driving module.

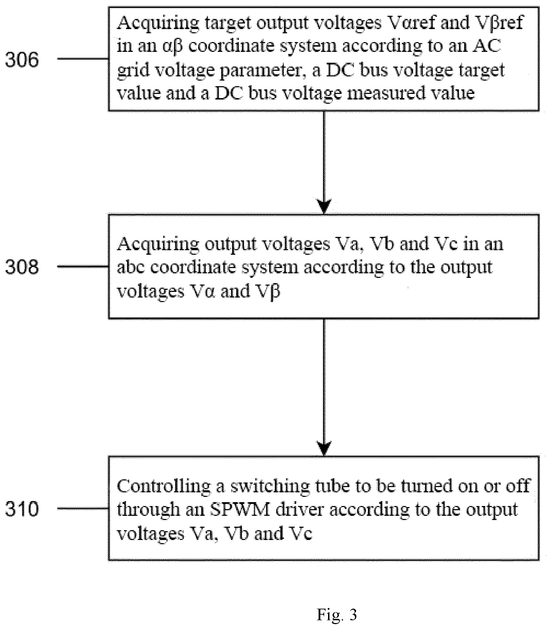

Fig. 3 is a flowchart of generating the DC/AC output voltage target value through calculation of the regulator, and Fig. 3 is also a preferred example of the above step 206, which serves as a sub-step of step 206. As shown in Fig. 3, step 108 further includes the following steps.

In step 302, target output voltages Vαref and Vβref in an αβ coordinate system are acquired according to the AC grid voltage parameter, the DC bus voltage target value and the DC bus voltage measured value.

In step 304, the output voltages Va, Vb and Vc in the abc coordinate system are acquired according to the output voltages Vα and Vβ.

In step 306, an SPWM driver controls the switching tube to be turned on or off according to the output voltages Va, Vb and Vc.

Further, phase angles required for coordinate transformation in steps 302, 304 and 306 are acquired by a current signal of the DC/AC inverter module.

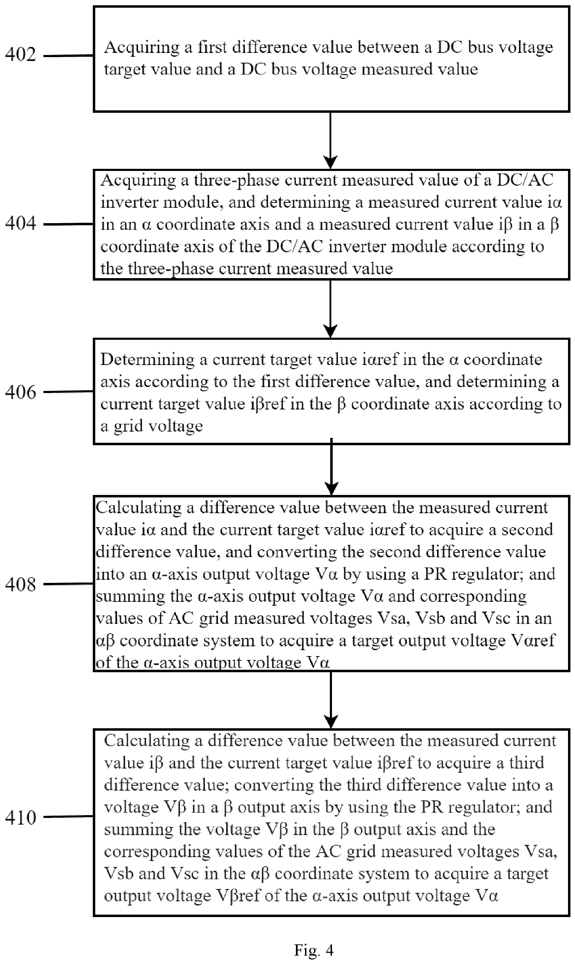

Fig. 4 is a preferred example of the above step 302, which serves as a sub-step of step 302. As shown in Fig. 4, step 302 further includes the following steps.

In step 402, a first difference value between the DC bus voltage target value and the DC bus voltage measured value is acquired.

In step 404, a three-phase current measured value of the DC/AC inverter module is acquired, and a measured current value iα in an α coordinate axis and a measured current value iβ in a β coordinate axis of the DC/AC inverter module are acquired according to the three-phase current measured value.

In step 406, a current target value iαref in the α coordinate axis is determined according to the first difference value, and a current target value iβref in the β coordinate axis is determined according to the grid voltage.

Specifically, the first difference value is converted into a d-axis current target value idref in a dq coordinate system through a PI regulator; and a q-axis current target value iqref is determined according to the grid voltage. The PI regulator is a proportional-integral controller, and the proportional-integral controller performs proportional amplification and integral operation on the first difference value and sums the two results to acquire the target value idref.

Furthermore, the current values idref and iqref in the dq coordinate system are converted into the current values iαref and iβref in the αβ coordinate system. The coordinate transformation method among the three-phase coordinate system, the dq coordinate system and the αβ coordinate system is a common technical means for those skilled in the art, and will not be repeated herein.

In step 408, the difference value between the measured current value iα and the current target value iαref is calculated to acquire a second difference value, and the second difference value is converted into an α-axis output voltage Vα by using a PR regulator; and the α-axis output voltage Vα and the corresponding values of AC grid measured voltages Vsa, Vsb and Vsc in the αβ coordinate system are summed to acquire the α-axis target output voltage Vαref.

In step 410, the difference value between the measured current value iβ and the current target value iβref is calculated to acquire a third difference value; and the third difference value is converted into a voltage Vβ in a β output axis by using the PR regulator. The β-axis output voltage Vβ and the corresponding values of the AC grid measured voltages Vsa, Vsb and Vsc in the αβ coordinate system are summed to acquire an target output voltage Vβref of the α-axis output voltage Vα.

Specifically, the three-phase coordinate system and the αβ coordinate system perform coordinate transformation on the three-phase current output by the output end of the DC/AC inverter module to acquire the measured current values iα and iβ.

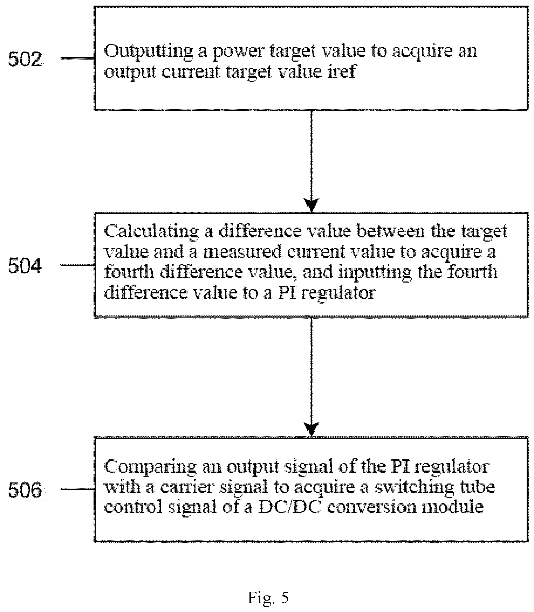

Fig. 5 is a preferred example of step 106, which serves as a sub-step of step 302. As shown in Fig. 4, step 106 further includes the following steps.

In step 502, the power target value is output to acquire an output current target value iref.

The output target current value iref is equal to Pref/v, wherein v is an output end voltage of the thermoelectric module.

In step 504, a difference value between the target value and the measured current value is calculated to acquire a fourth difference value, and the fourth difference value is input to the PI regulator.

In step 506, an output signal of the PI regulator is compared with a carrier signal to acquire a switching tube control signal of the DC/DC conversion module.

Due to the control flow 502-504, the output power of the thermoelectric module follows the heat consuming requirements of the users.

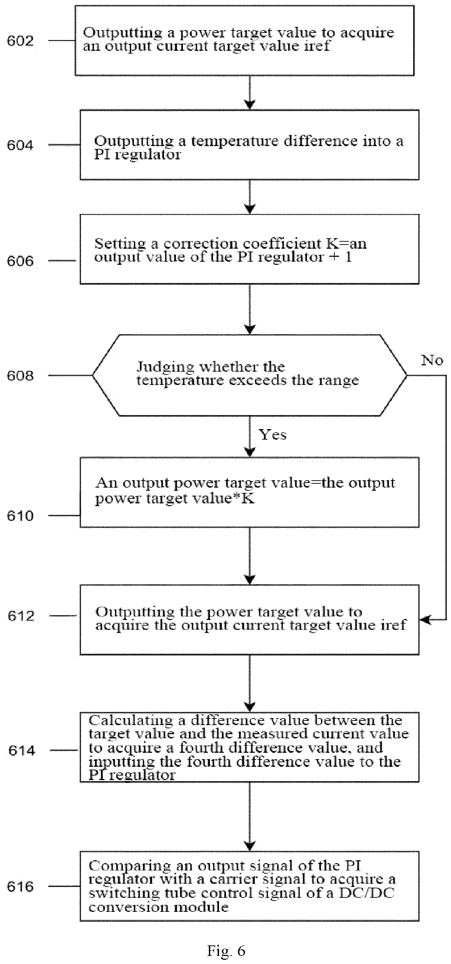

Fig. 6 is yet another preferred example of the above step 106, which serves as a sub-step of step 106. As shown in Fig. 6, steps 612-616 are the same as steps 502-506 in Fig. 5, and will not be repeated again.

From step 602 to step 606, a target power correction coefficient is acquired according to whether the temperature exceeds a set range (the temperature is too high or too low), so that the target power increases or decreases along with the increase or decrease of the temperature. The specific steps include the following steps.

In step 602, a temperature difference between a target temperature and a measured temperature is acquired.

In step 604, the temperature difference is input into the PI regulator.

In step 606, the correction coefficient K is set to be equal to the output value of the PI regulator plus 1.

In step 608, whether the temperature exceeds the range is judged, if the temperature exceeds the range, jumping is performed to recalculate the output power target value: the output power target value = the output power target value*K.

Preferably, when the measured temperature exceeds an upper limit of the range in step 608, the control flow jumps to step 612. When the measured temperature is lower than a lower limit of the range, the control flow jumps to step 610. Obviously, after step 610, the coefficient k is greater than one, and the output power increase of a hotspot module system can follow the heat requirements of the users.

Based on the above control flow, Fig. 7 provides a grid-connected operation control device for a fuel cell combined heat and power system. The control device can execute the above hotspot combined heat and power control method according to any embodiment of the present invention, and has corresponding functional modules for executing the method and beneficial effects.

As shown in Fig. 7, the control device for the fuel cell combined heat and power system includes a thermoelectric module (PEMFC) 702, a DC/DC conversion module 704, a DC/AC inverter module 706, a thermal management module 708 and a regulator 710. The thermoelectric module is connected to a DC bus through the DC/DC conversion module 704, an output end of the DC/DC module is connected to a DC load of a user 712, and an output end of the DC/AC inverter module 706 is connected to a AC load of the user and a grid.

A detection unit 714 is used to acquire a real-time heat supply temperature of the thermoelectric module, a DC bus voltage parameter and an AC grid voltage parameter.

A target power calculation module 716 is configured to calculate a thermoelectric output power target value according to the real-time heat supply temperature. The target power estimation module calculates the target power that should be output by the thermoelectric module according to factors such as water consumption per unit time, water temperature, water specific heat capacity and heat loss.

The regulator 710 generates a switching tube control signal of the DC/AC inverter module according to a measured bus voltage and a grid measured voltage, and generates a switching tube control signal of the DC/DC conversion module according to the real-time heat supply temperature and the output power target value of the thermoelectric module.

A switching tube driving unit is arranged in the DC/DC conversion module 704 and the DC/AC inverter module 706. The switching tube driving unit receives a switching control signal generated by the regulator 710, and controls a power switching tube in the DC/AC inverter module 706 or the DC/DC conversion module 704 according to the control signal.

In the above structure, the DC/DC conversion module and the DC/AC inverter module are connected in series. The regulator is divided into a regulator of the DC/AC inverter module 706 and a regulator of the DC/DC conversion module 704. The active and reactive components are decoupled with two degrees of freedom and the control of the reactive components is further realized.

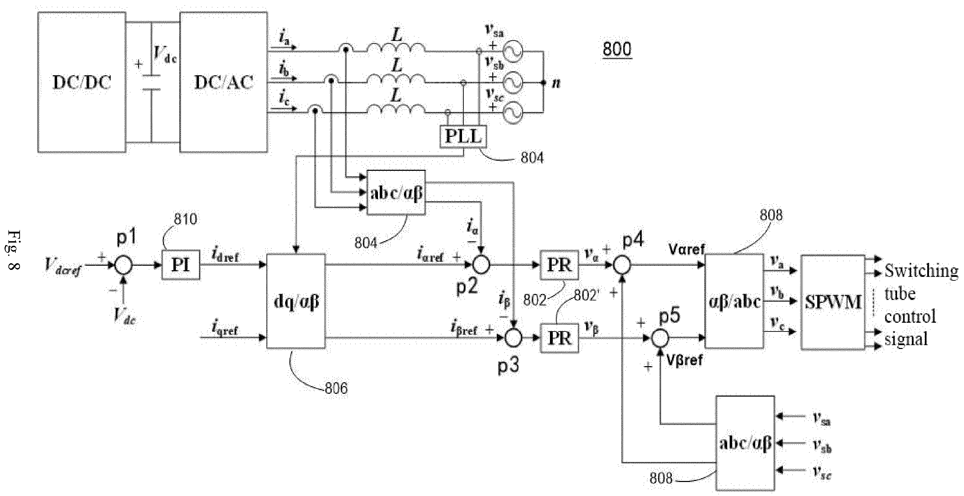

The regulator 710 is divided into a regulator 800 of the DC/AC inverter module and a regulator 900 of a DC/DC rectifier module. Fig. 8 shows the regulator of the DC/DC inverter module, and Fig. 8 shows the regulator of the DC/AC inverter module.

As shown in Fig. 8, the regulator of the DC/AC inverter module includes first to fifth adders (numbered p1-p5 in the figure) PI regulators, PR regulators 802 and 802', a cyclic phase locker pll804, a first abc/αβ coordinate system coordinate converter 804, a second abc/αβ and dq/αβ coordinate converter 806, an αβ/abc coordinate converter 808, a PI regulator 810, a first PR regulator and a second PR regulator.

The switching tube control signal of the regulator for the DC/AC inverter includes the follows.

A, the difference value Vdcref between the measured DC bus voltage Vdc and its target value is calculated, the difference value is input to calculate a d-axis current target value idref in the dq coordinate system through the PI regulator 810, and a q-axis current target value iqref is determined according to a grid instruction or a grid voltage; and the dq-axis current target values idref and iqref are input into the dq/αβ coordinate converter 806, to calculate the current target values iαref and iβref in the αβ coordinate system.

B, in actual measurement, the current signal at the input end of a filter inductor L is sampled by feedforward control to acquire three-phase output currents ia, ib and ic, which are input to the abc/αβ coordinate converter 804, and the sampled values ia, ib and ic are converted into the current values iα and iβ in the αβ coordinate system through the abc/αβ coordinate converter 804.

C, difference values between the above iαref and iβref and between the above iα and iβ are calculated, and according to the difference values, corresponding voltage values Vα and Vβ in the αβ coordinate system are calculated through the PR regulators 802 and 802'. The voltage values Vα and Vβ are respectively added with the measured three-phase grid voltages vsa, vsb and vsc through corresponding components of the adders p4 and p5 in the αβ coordinate system, and the inverter output voltage target values Vαref and Vβref are calculated. According to Vαref and Vβref, the inverter three-phase voltage target values va, vb and vc are calculated through αβ/abc coordinate transformation, and finally the inverter switching tube control signal is calculated through the SPWM. The inverter switching tube control signal is sent to the switching tube, so that the inverter output can be dynamically adjusted along with the fluctuation of the grid.

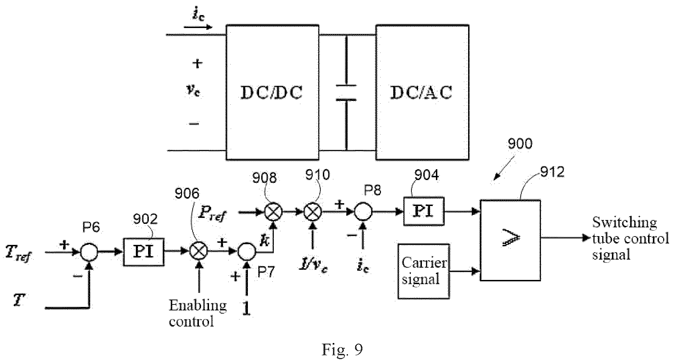

As shown in Fig. 9, the regulator of the DC/DC inverter module includes first to third adders (numbered p6-p8 in the figure), a first PI regulator 902, a second PI regulator 904, an enabler 906, a first multiplier 908, a second multiplier 910 and a comparator 912.

Acquiring the switching tube control signal of the DC/DC inverter by the regulator includes.

According to the target output power, the switching tube is controlled. Specifically, the output current target value iref is calculated by dividing the output power target value Pref of the fuel cell by the end voltage vc thereof through the second multiplier 910; the target value iref is input to the adder P8 to calculate a difference value between it and the measured output current ic and the difference value is used as the input of the second PI regulator 904; and the output of the second PI regulator 904 is compared with a carrier signal to calculate the switching tube control signal.

In the combined heat and power system, the function of correcting the target power according to the temperature range of hot water is also provided. When the hot water temperature T exceeds an allowable range (too low or too high), the "enabling control" signal of the enabler 906 is 1. A difference value between the actual hot water temperature T and its target value Tref is calculated, the temperature difference is input the first PI regulator 902 to calculate a result which is added with 1 to acquire the correction coefficient k of the output power target value of the fuel cell; and k and the target power are input to the multiplier to correct the target power, i.e., kPref, as the final output power target value of the fuel cell. When the hot water temperature is within the allowable range, the "enabling control" signal is 0 and k=1, that is, the output power target value of the fuel cell is not corrected.

According to the combined heat and power system of the present invention, a closed loop is formed between the current and voltage output by the fuel cell and the current, voltage and hot water requirements on the user side, and the transformation requirements can be responded by monitoring the temperature to correct the target power value. Meanwhile, the feedforward control is applied to realize rapid response. The PR regulator is used to perform closed-loop control on the current in the αβ coordinate system, which avoids complicated coordinate transformation and decoupling control and improves the dynamic performance of the system. The application of the feedforward control realizes the rapid response of the inverter output voltage when the grid voltage drops, which avoids the occurrence of an inverter surge current, and is beneficial to the improvement of system stability. Through the two degrees of freedom of the DC/DC inverter, the active components and reactive components can be decoupled.

It should be noted that the foregoing is only the preferred embodiments and the applied technical principles of the present invention. Those skilled in the art will understand that the present invention is not limited to the specific embodiments described herein, and for those skilled in the art, various obvious changes, readjustments and substitutions can be made without departing from the scope of protection of the present invention. Therefore, although the present invention has been described in detail through the above embodiments, the present invention is not limited to the above embodiments, and may further include more other equivalent embodiments without departing from the concept of the present invention, and the scope of the present invention is determined by the scope of the appended claims.

## Claims

1. A grid-connected operation control method for a fuel cell combined heat and power system, **characterized in that**
the fuel cell combined heat and power system comprises a thermoelectric module, a DC/DC conversion module, a DC/AC inverter module and a thermal management module; the thermoelectric module is connected to a DC bus through the DC/DC conversion module, andthe inverter module is connected to the DC bus; an output end of the DC/DC conversion module is connected to a DC load of a user, and an output end of the inverter unit is connected to an AC load of the user and a grid; and
the control method comprises the steps:
acquiring a real-time heat supply temperature of the thermoelectric module and an AC grid voltage parameter;
correcting output power of a fuel cell module according to the real-time heat supply temperature to acquire an output power target value;
controlling a switching tube of the DC/DC conversion module to be turned on or off according to the output power target value; and
generating a DC/AC inverter output voltage target value according to the AC grid voltage parameter, and controlling a switching tube of the DC/AC inverter module to be turned on or off according to the output voltage target value.

2. The grid-connected operation control method for the fuel cell combined heat and power system according to claim 1, **characterized in that** "generating a DC/AC inverter output voltage target value according to the AC grid voltage parameter, and controlling a switching tube of the DC/AC inverter module to be turned on or off according to the output voltage target value" further comprises the steps:
acquiring a real-time output current parameter of the DC/AC inverter module;
acquiring a DC bus voltage target value and a DC bus voltage measured value; and
correcting a DC/AC output voltage according to the real-time output current parameter of the DC/AC inverter module, the AC grid voltage parameter, the DC bus voltage target value and the DC bus voltage measured value.

3. The grid-connected operation control method for the fuel cell combined heat and power system according to claim 2, **characterized in that** "correcting a DC/AC output voltage according to the real-time output current parameter of the DC/AC inverter module, the AC grid voltage parameter, the DC bus voltage target value and the DC bus voltage measured value" further comprises the steps:
acquiring target output voltages Vαref and Vβref in an αβ coordinate system according to the AC grid voltage parameter, the DC bus voltage target value and the DC bus voltage measured value;
acquiring output voltages Va, Vb and Vc in an abc coordinate system according to the target output voltages Vαref and Vβref; and
controlling the switching tube to be turned on or off through an SPWM driver according to the output voltages Va, Vb and Vc.

4. The grid-connected operation control method for the fuel cell combined heat and power system according to claim 3, **characterized in that** "acquiring target output voltages Vαref and Vβref in an αβ coordinate system according to the AC grid voltage parameters, the DC bus voltage target value and the DC bus voltage measured value" further comprises the steps:
acquiring a first difference value between the DC bus voltage target value and the DC bus voltage measured value;
acquiring a three-phase current measured value of the DC/AC inverter module, and determining a measured current value iα in an α coordinate axis and a measured current value iβ in a β coordinate axis of the DC/AC inverter module according to the three-phase current measured value;
determining a current target value iαref in the α coordinate axis according to the first difference value, and determining a current target value iβref in the β coordinate axis according to a grid voltage; and
calculating a difference value between the measured current value iβ and the current target value iβref to acquire a third difference value; and converting the third difference value into a voltage Vβ in a β output axis by using a PR regulator.

5. The grid-connected operation control method for the fuel cell combined heat and power system according to claim 4, **characterized in that** "determining a current target value iαref in the α coordinate axis according to the first difference value, and determining a current target value iβref in the β coordinate axis according to a grid voltage" further comprises the steps:
converting the first difference value into a d-axis current target value idref in a dq coordinate system through a PI regulator; and determining a q-axis current target value iqref according to the grid voltage; and
converting the current values idref and iqref in the dq coordinate system into the current values iαref and iβref in the αβ coordinate system.

6. The grid-connected operation control method for the fuel cell combined heat and power system according to claim 5, **characterized in that** a phase-locked loop is used to calculate an angle required for transformation between the dq coordinate system and the αβ coordinate system based on measured grid voltages vsa, vsb and vsc in the abc coordinate system.

7. The grid-connected operation control method for the fuel cell combined heat and power system according to claim 1, **characterized in that** "controlling a switching-off tube of the DC/DC conversion module to be turned on or off according to the output power target value" further comprises: outputting the power target value to acquire an output current target value iref;
calculating a difference value between the target value and a measured current value to acquire a fourth difference value, and inputting the fourth difference value to a PI regulator; and
comparing an output signal of the PI regulator with a carrier signal to acquire a switching tube control signal of the DC/DC conversion module.

8. The grid-connected operation control method for the fuel cell combined heat and power system according to claim 7, **characterized in that** "controlling a switching-off tube of the DC/DC conversion module to be turned on or off according to the output power target value" further comprises: judging whether the heat supply temperature exceeds an allowable range, if exceeding the allowable range, generating a target output power correction coefficient K according to a temperature difference between a target temperature and a measured temperature, and correcting the output power target value to K times an original value.

9. The grid-connected operation control method for the fuel cell combined heat and power system according to claim 8, **characterized in that** "generating a target output power correction coefficient K according to a temperature difference between the target temperature and a measured temperature" further comprises: inputting the temperature difference into the PI regulator, and adding 1 to an output value of the PI regulator to acquire the correction coefficient K.

10. A grid-connected operation control device for a fuel cell combined heat and power system, **characterized in that** the control device comprises a thermoelectric module, a DC/DC conversion module, a DC/AC inverter module, a thermal management module, a detection unit, a target power calculation module and a regulator;
the thermoelectric module is connected to a DC bus through the DC/DC conversion module, and an inverter unit is connected to the DC bus;
an output end of the DC/DC conversion module is connected to a DC load of a user, and an output end of the inverter unit is connected to an AC load of the user and a grid;
the detection unit acquires a real-time heat supply temperature of the thermoelectric module, a DC bus voltage parameter and an AC grid voltage parameter;
the target power calculation module calculates a thermoelectric output power target value according to the real-time heat supply temperature;
the regulator generates a switching tube control signal of the DC/AC inverter module according to a measured bus voltage and a grid measured voltage, and generates a switching tube control signal of the DC/DC conversion module according to the real-time heat supply temperature and the output power target value of the thermoelectric module; and
a switching tube driving unit of the DC/DC conversion module is used to compare an output signal of an output power regulator with a carrier signal tube control signal to generate the switching tube control signal of the DC/DC module.
